# EUROPÄISCHE PATENTANMELDUNG

(11) **EP 3 643 970 A1**
(43) Veröffentlichungstag der Anmeldung: **29.04.2020**
(21) Anmeldenummer: 18201996.8
(22) Anmeldetag: 23.10.2018
(51) Int. Cl.: F23R 3/06, F23R 3/12, F23R 3/16, F23R 3/34, F23R 3/38, F23R 3/58, F23D 1/02, F23M 5/08

(54) **KONTINUIERLICH ARBEITENDE UND FLUIDATMENDE FLUIDENERGIEMASCHINE UND VERFAHREN ZUM BETRIEB EINER SOLCHEN**

(71) Anmelder: Staudacher, Robert, 83101 Rohrdorf (DE)
(72) Erfinder: Staudacher, Robert, 83101 Rohrdorf (DE); Wagner, Christian, 83022 Rosenheim (DE)
(74) Vertreter: V.O.

(57) **Zusammenfassung**

Vorliegende Erfindung betrifft eine Fluidenergiemaschine (1), beispielsweise eine Gasturbine oder dergleichen Verbrennungsmaschine zur Energiegewinnung oder zur Verwendung als Triebwerk, umfassend eine Brennkammer (2) mit einem Brennraum (4), der sich in seinem Querschnitt entlang einer Haupterstreckungsrichtung (Rₓ₂) von einem Einlassende (6) zu einem Auslassende (8) verjüngt, und der einen axial in den Brennraum (4) mündenden Quartärfluideinlass (400) aufweist, um dem Brennraum (4) ein Quartärfluid zuzuführen, und einen tangential in den Brennraum (4) mündenden Tertiärfluideinlass (300), um dem Brennraum (4) tangential ein Tertiärfluid zuzuführen, wobei der Tertiärfluideinlass (300) eine Mischkammer (302) mit einem sich in seinem Querschnitt verjüngenden Mischraum (304) aufweist, wobei die Mischkammer (302) einen axial in den Mischraum (304) mündenden Sekundärfluideinlass (200) aufweist, um dem Mischraum (304) ein Sekundärfluid zuzuführen, und einen tangential in den Mischraum (304) mündenden Primärfluideinlass (100), um dem Mischraum (304) ein Primärfluid zuzuführen.

## Beschreibung

Vorliegende Erfindung betrifft eine insbesondere kontinuierlich arbeitende und fluidatmende Fluidenergiemaschine, beispielsweise eine Gasturbine oder dergleichen Verbrennungsmaschine zur Energiegewinnung oder zur Verwendung als Triebwerk, umfassend wenigstens eine Brennkammer mit einem Brennraum, in den über einen Quartärfluideinlass ein Quartärfluid und über einen Tertiärfluideinlass ein Tertiärfluid derart zuführbar sind, dass sie sich im Brennraum miteinander vermischen und wenigstens teilweise verbrannt werden.

Derartige Fluidenergiemaschinen sind aus dem Stand der Technik bekannt. Sie haben unterschiedliche Anwendungsgebiete, und unterscheiden sich unter anderem in der Art der Fluide und auf welche Weise diese Fluide der Fluidenergiemaschine zugeführt wird.

So ist es beispielsweise möglich, eine solche Fluidenergiemaschine als Gasturbine auszubilden, wobei die zugeführten Fluide dann in der Brennkammer miteinander gemischt und wenigstens teilweise verbrannt werden, sodass sie als insbesondere beschleunigtes Quintärfluid die Brennkammer verlassen. Eine solche Fluidenergiemaschine ist beispielsweise als Heizeinrichtung für Immobilien, als Energielieferant oder auch als Triebwerk für Flugzeuge realisierbar.

Bei solchen Fluidenergiemaschine besteht u.a. das Problem darin, dass zum Starten des Misch- und Verbrennungsvorganges meist eine aktive Beschleunigung wenigstens des Quartärfluides notwendig ist. Hierzu werden beispielswiese Kompressoren verwendet, die das Quartärfluid beschleunigt in die Brennkammer einführen. Das bedeutet, dass Fluidenergiemaschinen wie sie aus dem Stand der Technik bekannt sind, ohne zusätzliche aktiv anzutreibende Startvorrichtungen nur schwer oder gar nicht Standschubfähig sind.

Aufgabe der vorliegenden Erfindung ist es, eine Fluidenergiemaschine und insbesondere eine kontinuierlich arbeitende und fluidatmende Fluidenergiemaschine, wie eine Gasturbine oder dergleichen Verbrennungseinrichtung anzubieten, die eine effektivere Verbrennung von Fluiden und insbesondere ein verbessertes Startverhalten aufweist.

Diese Aufgabe wird durch eine Fluidenergiemaschine und durch ein Verfahren zum Betrieb einer solchen gemäß den unabhängigen Ansprüchen gelöst.

Diese Aufgabe wird insbesondere durch eine Fluidenergiemaschine und insbesondere kontinuierlich arbeitende und fluidatmende Fluidenergiemaschine, wie eine Gasturbine oder dergleichen Verbrennungseinrichtung, gelöst, umfassend wenigstens eine Brennkammer mit wenigstens einem Brennraum, gelöst, wobei sich der Brennraum in seinem Querschnitt entlang einer Haupterstreckungsrichtung R_{X2} von einem Einlassende mit einem großen Durchmesser zu einem Auslassende mit einem kleinen Durchmesser verjüngt, wobei am Auslassende eine sich in Haupterstreckungsrichtung R_{X2} in ihrem Querschnitt in Haupterstreckungsrichtung R_{X2} erweiternde Düse vorgesehen ist und wobei am Einlassende ein den Brennraum insbesondere stirnseitig verschließendes Verschlussteil vorgesehen ist, wobei das Verschlussteil Folgendes aufweist: wenigstens einen insbesondere axial in den Brennraum mündenden Quartärfluideinlass, um dem Brennraum wenigstens ein Quartärfluid zuzuführen, und wenigstens einen tangential in den Brennraum mündenden Tertiärfluideinlass, um dem Brennraum tangential wenigstens ein Tertiärfluid zuzuführen, wobei der Tertiärfluideinlass wenigstens eine Mischkammer, insbesondere eine sogenannte Tertiärfluideinlassdüse aufweist, mit einem sich in seinem Querschnitt entlang einer Haupterstreckungsrichtung von einem Einlassende, mit einem großen Durchmesser, zu einem Auslassende, mit einem kleinen Durchmesser, verjüngenden Mischraum, und wobei die Mischkammer Folgendes aufweist: Wenigsten einen insbesondere axial in den Mischraum mündenden Sekundärfluideinlass, um dem Mischraum wenigstens ein Sekundärfluid zuzuführen, und wenigstens einen tangential in den Mischraum mündenden Primärfluideinlass, um dem Mischraum wenigstens ein Primärfluid zuzuführen.

Diese Aufgabe wird auch durch ein Verfahren zum Betrieb einer Fluidenergiemaschine, wie sie hier beschrieben ist, gelöst, umfassend die folgenden Schritte: Zuführen eines Primärfluides über den tangentialen Primärfluideinlass in den Mischraum der Mischkammer, sodass sich im Mischraum eine Wirbelströmung bildet, wobei durch einen Venturi-Effekt über den Sekundärfluideinlass ein Sekundärfluid in den Mischraum gefördert wird und sich durch eine Primärfluid-Sekundärfluid-Mischung einer Tertiärfluid bildet; Zuführen des Tertiärfluides über den tangentialen Tertiärfluideinlass zum Brennraum der Brennkammer, sodass sich im Brennraum eine Wirbelströmung bildet, wobei durch einen Venturi-Effekt über den Quartärfluideinlass ein Quartärfluid in den Brennraum gefördert wird, wobei ein Tertiärfluid-Quartärfluid-Gemisch gebildet und am Auslassende des Brennraums als Quintärfluid ausgegeben wird.

Kern der Erfindung ist unter anderem die Verwendung von sich entlang der jeweiligen Haupterstreckungsrichtung bzw. der Hauptströmungsrichtung in ihrem Querschnitt verringernder Brennräumen und Mischräumen, die derart angeordnet sind, dass Fluide über den Mischraum und den jeweiligen Einlass im Brennraum zusammengeführt und durch die Fluidenergiemaschine geführt werden. Unter dem Begriff "tangentiales Einleiten" und "axiales Einleiten" wird hier optional jede Art von Einleiten verstanden, die "im Wesentlichen tangential" bzw. "im Wesentlichen axial" ausgerichtet ist. Insbesondere kann hier die Einleitung um einen Winkel von bis zu ±15 Grad, optional von bis zu ±10 Grad zur vollständigen Axialität bzw. Tangentialität abweichen. Optional beträgt der tangentiale Abweichungswinkel bis zu +15 Grad, optional bis zu +10 Grad, wobei diese positive Winkeldefinition eine Abweichung der Einlassrichtung in Richtung des Zentrums, also von der Wandung weg gerichtet definiert.

Unter einem Fluid wird optional jede Art von Flüssigkeit und/oder Gas verstanden, wobei wenigsten ein Fluid auch in unterschiedlichen, sich verändernden Aggregatzuständen durch die Fluidenergiemaschine geführt werden kann. So ist es beispielsweise denkbar, wenigstens ein Fluid zuerst in einer flüssigen Form durch die Fluidenergiemaschine zu führen und dann in einen gasförmigen Aggregatzustand überzuführen. Optional umfasst wenigstens eines der Fluide, und insbesondere das Primärfluid, einen Brennstoff. Es ist auch denkbar, wenigstens ein Fluid als ein Brennstoff-GasGemisch oder dergleichen Brennstoff-Fluid-Gemisch, also ein Gemisch aus einem Brennstoff und einem eine Verbrennung begünstigendem Fluid und insbesondere Gas herzustellen, beispielsweise Luft.

Unter einer "Düse" wird im Umfang der Erfindung jegliche Art von Auslassmittel verstanden, geeignet, um das im jeweiligen Raum, den die Düse am Auslassende abschließt geführte Fluid auszuleiten.

Es sei angemerkt, dass im Umfang der Erfindung von "Haupterstreckungsrichtungen" und "Hauptströmungsrichtungen" geredet wird. Das bedeutet, dass ein entlang der Haupterstreckungsrichtung bzw. Hauptströmungsrichtung geführtes Fluid bei globaler Betrachtung in dieser Richtung geführt wird. Während dieser globalen Führung kann darüber hinaus eine davon abweichende lokale Richtung eingenommen werden. Beispielsweise kann ein Fluid in Haupterstreckungsrichtung auch spiralförmig mäandernd oder in einer dergleichen, insbesondere abschnittsweise von der Haupterstreckungsrichtung abweichenden Richtung geführt werden.

Es hat sich herausgestellt, dass bei einer hier beschriebenen Fluidenergiemaschine eine effektivere bzw. eine sehr energieeffizienter Beschleunigung der durch die Fluidenergiemaschine geführten Fluide erreicht werden kann. Durch die Verwendung des beschriebenen sich verjüngenden Mischraums und die erfindungsgemäße Einführung der Primär- und Sekundärfluide in axialer und tangentialer Richtung erfolgt bereits im Mischraum eine energieeffiziente Führung und Mischung der geführten Fluide, die durch die erfindungsgemäße Einleitung des resultierenden Tertiärfluides in den Brennraum der Brennkammer in tangentialer Richtung und die anschließende Vermischung mit dem axial eingeführten Quartärfluid weiter energetisch verbessert wird. Das Resultat ist ein optimal energieeffizient vermischtes und, je nach Ausführungsform, beschleunigtes Quintärfluid, das über die Düse die Fluidenergiemaschine als Quintärfluid verlässt. Ein weiterer Vorteil einer solchen Fluidenergiemaschine ist, dass das Starten der Maschine ohne künstliche bzw. aktive Beschleunigung des Quartärfluides und vor allem ohne zusätzliche Beschleunigende Einrichtungen wie Kompressoren möglich ist. Eine solche Fluidenergiemaschine kann standschubfähig ausgebildet werden.

Optional sind der Quartärfluideinlass und der Tertiärfluideinlass und/oder der Sekundärfluideinlass und der Primärfluideinlass derart komplementär zueinander angeordnet, dass sich ein Venturi-Wirbelrohr-Effekt in der Brennkammer und/oder in der Mischkammer ausbildet. Beispielsweise können der Quartärfluideinlass und der Tertiärfluideinlass so angeordnet sein, dass durch das tangentiale Einleiten des Tertiärfluides das Quartärfluid in die Brennkammer bzw. seinen Brennraum eingesaugt wird, und auch umgekehrt. Selbiges gilt optional für den Primärfluideinlass, der derart tangential in die Mischkammer mündet, dass das Sekundärfluid durch einen Venturi-Wirbelrohr-Effekt in die Mischkammer bzw. seinen Mischraum gesaugt wird, und auch umgekehrt. Auch sind Mischformen denkbar, wobei beispielsweise eine Teilmenge wenigstens eines Fluides über einen solchen Venturi-Effekt eingesaugt, eine andere Teilmenge aktiv eingebracht und insbesondere gepumpt wird.

Optional umfasst das Primärfluid wenigstens einen Brennstoff, wie zuvor bereits beschrieben. Optional stehen der Quartärfluideinlass und/oder der Sekundärfluideinlass mit der Atmosphäre in Fluidverbindung. Weiter optional sind das Quartärfluid und/oder das Sekundärfluid Luft. Es ist möglich, dass der Quartärfluideinlass und/oder der Sekundärfluideinlass in direkter Fluidverbindung mit der Atmosphäre stehen. Das ist insbesondere vorteilhaft, wenn, wie zuvor beschrieben, der Quartärfluideinlass und der Tertiärfluideinlass und/oder der Primärfluideinlass und der Sekundärfluideinlass derart komplementär zueinander angeordnet sind, dass sich ein Venturi-Wirbelrohr-Effekt in der Brennkammer bzw. in der Mischkammer ausbildet. Bei der direkten Verbindung des Quartärfluideinlasses und/oder des Sekundärfluideinlasses mit der Atmosphäre wird so auf einfache und zuverlässige Weise Luft aus der Atmosphäre in die Fluidenergiemaschine gezogen.

Optional sind der Brennraum und/oder der Mischraum in ihrer jeweiligen Haupterstreckungsrichtung R_{X2}; R_{X302} wenigstens abschnittsweise in Form eines sich stetig verjüngenden und insbesondere verjüngenden hyperbolartigen Trichters ausgeführt. Der hyperbolartige Trichter ist dabei optional als hyperboloider Trichter, nämlich als sogenannte Torricelli Trompete ausgeführt und insbesondere als Rotationskörper eines Graphen mit der Form y=1/x, mit dem Definitionsbereich X>1, rotierend um die X-Achse. Im Umfang der Erfindung gelten auch Volumenkörper mit einer Abweichung von ±10 % von dieser geometrischen Form mitumfasst. Es hat sich herausgestellt, dass ein in einem derartigen Volumenkörper geführtes Fluid auf besonders effektive Weise geführt und optional beschleunigbar geführt wird.

Optional sind der Quartärfluideinlass und/oder Tertiärfluideinlass und/oder der Sekundärfluideinlass und/oder der Primärfluideinlass in ihrem jeweiligen Querschnitt entlang ihrer Haupterstreckungsrichtung R_{X400}; R_{X300}; R_{X200}; R_{X100} von einem Einlassende mit einem großen Durchmesser zu einem Auslassende mit einem kleinen Durchmesser verjüngend und insbesondere in Form eines sich verjüngenden hyperbolartigen Trichters ausgebildet. Auch für einen solchen hyperbolartigen Trichter kann das zuvor Genannte gelten. Das heißt, ein solcher hyperbolartiger Trichter ist optional als hyperboloider Trichter, nämlich als sogenannte Torricelli Trompete ausgeführt und insbesondere als Rotationskörper eines Graphen mit der Form y=1/x, mit dem Definitionsbereich X>1, rotierend um die X-Achse. Im Umfang der Erfindung gelten auch Volumenkörper mit einer Abweichung von ±10 % von dieser geometrischen Form mitumfasst.

Optional ist an der Brennkammer und/oder an der Mischkammer und insbesondere im Auslassbereich bzw. einem Auslassende des Mischraums eine Düse vorgesehen. Diese Düse kann als ein Lavaldüse ausgebildet sein. Sie kann als eine sich erweiternde Düse ausgebildet sein. Eine solche Düse kann die Form eines hyperbolartigen und insbesondere hyperboloiden Trichters aufweisen. Sie kann als Diffusor ausgebildet sein. Optional ist die Düse derart ausgebildet, dass sie die Wirbelströmung des Fluids, das in der Brennkammer bzw. der Mischkammer geführt wird, gleichrichtet und/oder eine möglichst hohe Ausströmungsgeschwindigkeit generiert. Die Düse kann analog zur Geometrie der Brennkammer bzw. der Mischkammer insbesondere gegenläufig dazu ausgeführt sein.

Es ist möglich, eine solche Düse mit einer Spiralströmungsführung zu versehen, um das geführte Fluid in einen spiralförmigen Strömungsweg insbesondere mit in Strömungsrichtung abnehmender Steigung zu zwingen. Eine solche Spiralströmungsführung können beispielsweise Einbauten und insbesondere Vorsprünge sein, die das in der Düse geführte Fluid, in eine Spiralströmung zwingen. Es ist auch möglich, die Düse in einer in sich gedrehten Form auszubilden, sodass sich eine solche Spiralströmungsführung und/oder ein spiralförmiger Strömungsweg ergibt. Optional ist die Spiralform dabei so gewählt, dass sich eine hyperbolartige und insbesondere hyperbolisch abnehmende Steigung ergibt.

Optional weist wenigstens ein Fluideinlass, insbesondere der Primärfluideinlass und/oder der Sekundärfluideinlass, wenigstens ein Fluidleitungsmittel und insbesondere Primärfluidleitungsmittel bzw. Sekundärfluidleitungsmittel auf. Optional steht der Fluideinlass über wenigstens ein Fluidleitungsmittel mit wenigstens einem Fluidreservoir, beispielsweise einem Brennstoffreservoir, oder einer Fluidpumpe, beispielsweise einer Brennstoffpumpe, in Fluidverbindung. Optional ist das Fluidreservoir ein Druckreservoir, in dem das zu führende Fluid unter Druck steht und so optional dem Einlass druckbeaufschlagt zugeführt wird.

Optional weisen wenigstens ein Abschnitt des Primärfluidleitungsmittels und/oder des Sekundärfluidleitungsmittels und/oder wenigstens einer der Fluideinlässe und/oder wenigstens eine der Kammern wenigstens ein Fluidwärmungsmittel auf. Ein solches Fluidwärmungsmittel kann beispielsweise ein der Brennkammer und/oder der Mischkammer zugeordneter Wärmetauscher sein. "zugeordnet" bedeutet optional, dass der Wärmetauscher mit der Kammer in Thermokopplung steht, so dass insbesondere Wärmeenergie der Kammer über den Wärmetauscher auf das Fluid übertragen werden kann. Der Wärmetauscher kann insbesondere wenigstens eine in und/oder an der Wandung der Kammer verlaufende Fluidleitung aufweisen. Ein solches Fluidwärmungsmittel kann auch, insbesondere in Ergänzung und/oder alternativ, eine Zündvorrichtung zur Zündung eines zündfähigen Fluides und insbesondere Fluidgemischs sein. Der Vorteil eines solchen Fluidwärmungsmittels liegt in der Möglichkeit, ein in dem jeweiligen Fluidleitungsmittel und/oder der jeweiligen Kammer und/oder dem jeweiligen Fluideinlass geführtes Fluid anzuwärmen und/oder zu zünden. So kann beispielsweise ein in die Mischkammer eingeleitetes Primärfluid über einem der Brennkammer zugeordneten Wärmetauscher vorgewärmt werden, sodass es in erwärmtem Zustand in die Mischkammer eingeführt und dort mit dem Sekundärfluid vermischt wird. Die Vorwärmung kann dabei so erfolgen, dass sich ein zündfähiges Fluidgemisch in der Mischkammer und insbesondere ein selbstzündfähiges Fluidgemisch bilden. Der optionale Effekt ist eine Selbstzündung des Gemischs aus Sekundärfluid und Primärfluid in der Mischkammer, wodurch das resultierende Tertiärgemisch mit hoher Geschwindigkeit und/oder hoher Temperatur der Brennkammer, insbesondere einer Brennkammer zugeführt wird. In Ergänzung oder alternativ ist es denkbar, dass Fluidwärmungsmittel mit einer Zündvorrichtung auszubilden, um ein in der Brennkammer und/oder der Mischkammer geführtes Fluid und/oder Fluidgemisch aktiv zu zünden. Hier können beispielsweise Glühmittel oder dergleichen Zündmitteln in der Wandung der Brennkammer bzw. der Mischkammer vorgesehen sein. Bei Kontakt des Fluides bzw. Fluidgemischs mit diesem Glühmittel oder dergleichen Zündmitteln kommt es zur Entzündung des zündfähigen Fluids und zur wenigstens teilweisen Verbrennung. Das Fluidwärmungsmittel kann so ausgebildet sein, dass das damit in Kontakt tretende, geführte Fluid seinen Aggregatzustand ändert. So kann beispielsweise ein zuvor flüssiges Fluid durch den Kontakt mit dem Fluidwärmungsmittel in ein im Wesentlichen teilweise gasförmiges Fluid übergeführt werden. Die Bildung eines selbstzündenden Fluidgemischs wird dadurch erleichtert. Optional ist das Fluidwärmungsmittel als Fluidvorwärmungsmittel ausgebildet.

Soll insbesondere die Selbstzündung eines Fluides vermieden werden, ist es auch möglich, dass Fluidwärmungsmittel als Fluidkühlungsmittel auszubilden. Auch dies ist von der Erfindung mit umfasst. Auf diese Weise kann beispielsweise die Gefahr einer Selbstzündung durch die Kühlung des beispielsweise im jeweiligen Leitungsmittel geführten Fluides reduziert werden.

Das Fluidwärmungsmittel weist optional wenigstens ein Fluidleitungsmittel auf, das insbesondere spiralförmig oder dergleichen mäandernd in und/oder an der Wandung der Brennkammer und/oder Mischkammer verlaufend angeordnet ist und/oder wenigstens abschnittsweise in und/oder wenigstens abschnittsweise an der Wandung der Brennkammer und/oder Mischkammer von der Düse zum Einlass, insbesondere dem Tertiärfluideinlass bzw. Primärfluideinlass verlaufende ausgebildet ist. Durch die Führung des Fluidleitungsmittels in der jeweiligen Wandung kann ein effektiver Wärmeübertrag der in der Brennkammer bzw. Mischkammer insbesondere durch Verbrennung entstehenden Wärme in das in dem Fluidleitungsmittel geführten Fluid erreicht werden. Darüber hinaus ist es möglich, das Fluidleitungsmittel bzw. das Fluidwärmungsmittel derart auszubilden, dass es eine Kühlung der Düse und/oder der Kammerwandung bewirkt wird. Optional wird dabei das Fluid als gekühltes Fluid der Fluidenergiemaschine und insbesondere dem Fluidwärmungsmittel zugeführt, um über das Fluidwärmungsmittel erwärmt zu werden.

Optional ist das Fluidleitungsmittel spiralförmig und/oder mäandernd geführt angeordnet. Weiter optional ist es derart ausgebildet, dass es der Fluidvorwärmung und/oder der Druckerhöhung des geführten Fluids dient und/oder eine Kühlung der Düsen und/oder Kammerwandung bewirkt. Optional ist es denkbar, dass das Fluidleitungsmittel einen runden, und insbesondere Kreisrunden Querschnitt aufweist. Als runder Querschnitt wird optional ein Querschnitt mit einer stetigen Wandungsentwicklung angesehen. Weiter optional ist es möglich, Leitvorrichtungen im Fluidleitungsmittel vorzusehen, insbesondere um eine Eindrehung der Strömung des geführten Fluides zu bewirken. Diese Leitvorrichtungen sind dabei vorzugsweise so ausgebildet, dass sie das geführte Fluid in eine spiralförmige Strömung entlang der Hauptströmungsrichtung im Fluidleitungsmittel zwingen.

Optional ist die Fluidenergiemaschine derart ausgeführt, dass wenigstens ein in der Fluidenergiemaschine geführtes Fluid in beschleunigter Form die Fluidenergiemaschine als Quintärfluid verlässt. Eine solche Ausführungsform ist beispielsweise als eine Gasturbine und/oder als ein Triebwerk realisierbar.

Insbesondere bei der Ausbildung als Gasturbine und/oder als Triebwerk ist die Aufgabe der Erfindung, die Fluidenergiemaschine standschubfähig auszubilden und insbesondere derart, dass keine aktive, insbesondere maschinelle Beschleunigung insbesondere des über den Quartärfluideinlass zugeführten Fluides nötig ist. Diese Aufgabe wird erfindungsgemäß bei einer wie oben als Gasturbine und/oder als Triebwerk ausgebildeten erfindungsgemäßen Fluidenergiemaschine gelöst.

Optional weisen der Tertiärfluideinlass und/oder der Primärfluideinlass wenigstens jeweils ein Ventilmittel auf, um die Zufuhr des darin geführten Fluides zu stoppen und/oder zu ermöglichen und/oder in der Zuführmenge zu regeln. Optional ist das Ventilmittel dabei derart ausgebildet, dass es den Zufluss des Tertiärfluides und/oder des Primärfluides dann ermöglichen, wenn ein ausreichender Tertiärfluid- bzw. Primärfluiddruck und/oder eine ausreichende Tertiärfluidtemperatur bzw. Primärfluidtemperatur erreicht ist, um in der jeweiligen Brennkammer bzw. Mischkammer einen Venturi-Wirbelrohr-Effekt auszubilden und insbesondere Quartärfluid bzw. Sekundärfluid anzusaugen. Hier kann dann von einer Selbstzündung der Fluidenergiemaschine geredet werden. Das Ventilmittel ist optional so ausgebildet, dass es erst öffnet, wenn das über den Primärfluideinlass und die Primärfluiddruckquelle, beispielsweise einem Fluidreservoir oder einer Fluidpumpe, zugeführte Primärfluid die ausreichende Temperatur bzw. den ausreichenden Druck für die Selbstzündung in der Mischkammer erreicht. Selbiges gilt optional für ein optional dem Tertiärfluid zugeordnetes Ventilmittel.

Optional ist im Quartärfluideinlass und/oder Tertiärfluideinlass und/oder Sekundärfluideinlass und/oder Primärfluideinlass und/oder Brennraum und/oder Mischraum wenigstens eine Stromleitführung für den Fluidstrom vorgesehen. Es ist denkbar, dass zur Bildung der Stromleitführung der Quartärfluideinlass und/oder der Tertiärfluideinlass und/oder der Sekundärfluideinlass und/oder der Primärfluideinlass und/oder der Brennraum und/oder der Mischraum wenigstens abschnittsweise in sich gedreht ausgeführt sind, insbesondere um für das darin geführte Fluid einen in sich gedrehten Strömungsweg zu definieren. Auch ist es denkbar, dass sie derart ausgebildet sind, dass sie das darin geführte Fluid in einen in sich gedrehten Strömungsweg zwingen. Es ist denkbar, wenigstens eine Stromleitführung, insbesondere Spiralströmungsführung auszubilden, beispielsweise in Form einer hyperbolartigen insbesondere hyperbolischen Spirale, um das geführte Fluid in eine Spiralströmung und insbesondere eine logarithmisch abnehmende hyperbolartige Spiralbahn zu drängen. Optional ist wenigstens eine Stromleitführung, insbesondere eine Spiralströmungsführung vorgesehen, beispielsweise als ein Einbaumittel mit wenigstens einem Leitblech oder einer dergleichen Führungselement. Auch ist es möglich, eine solche Stromleitführung integral mit der Wandung auszuführen und insbesondere mittels entsprechend ausgebildeter Erhebungen in der Wandung, die in Querschnittsebene den Querschnitt im Strömungsweg entsprechend reduzieren, sodass das darin geführte Fluid in eine Richtungsänderung gezwängt wird. Bei einer spiralförmigen Anordnung der Stromleitführung ergibt sich so eine spiralförmige Strömungsbahn des geführten Fluids. Optional ist es denkbar, den jeweiligen Einlass oder die Kammer und insbesondere die Wandungen des jeweiligen Einlasses bzw. Kammer um die jeweilige Haupterstreckungsachse tordiert auszubilden, wodurch sich eine spiralförmige Strömungsführung im Strömungsweg ergibt. Es ist denkbar, die Stromleitführung derart auszubilden, dass sich abnehmende und/oder zunehmende Steigungen in der Strömungsbahn und insbesondere in einer spiralförmigen Helixbahn ergeben. Die Stromleitführung ist optional so ausgebildet, dass sich die Steigung entlang der Haupterstreckungsrichtung spiralförmig reduziert. Die Stromleitführung ist optional zur Strömungsgleichrichtung ausgebildet, um eine dort geführte Strömung gleichzurichten bzw. zu laminarisieren.

Optional sind der Quartärfluideinlass und/oder der Tertiärfluideinlass und/oder der Sekundärfluideinlass und/oder der Primärfluideinlass und/oder der Brennraum und/oder der Mischraum in ihrem Querschnitt rund ausgebildet und insbesondere kreisrund. Es sind auch elliptische und dergleichen stetig entwickelte Querschnittsformen anwendbar.

Optional sind der Tertiärfluideinlass und/oder der Primärfluideinlass um eine orthogonal zur jeweiligen Hauptströmungsrichtung in der einmündenden Kammer verlaufenden Schwenkachse in einer Schwenkrichtung entgegen der Hauptströmungsrichtung R_{X2}; R_{X302} in einem Bereich von 90 Grad bis 150 Grad verschwenkbar ausgebildet. Auf diese Weise kann beispielsweise ein über den jeweiligen Einlass geführtes Fluid tangential und darüber hinaus bereits in Hauptströmungsrichtung beschleunigt werden. Insbesondere beim Start der Fluidenergiemaschine ist optional der jeweilige Einlass in einem Winkel von 90 Grad geschwenkt, also tangential-orthogonal zur Haupterstreckungsachse. Während des Betriebs kann dieser Schwenkwinkel dann auf bis zu 150 Grad erhöht werden so dass die Einleitungsrichtung verstärkt in die Hauptströmungsrichtung weist.

Optional weist die Mischkammer ein den Mischraum an einem Einlassende verschließendes Verschlussteil auf, an dem wenigstens der eine Sekundärfluideinlass und wenigstens der eine Primärfluideinlass vorgesehen sind. Darüber hinaus weist die Mischkammer optional an einem Auslassende des Mischraums eine sich in Haupterstreckungsrichtung in ihrem Querschnitt erweiternde Düse, wie sie bereits zuvor auch schon beschrieben wurde, auf.

Es ist denkbar, die hier beschriebenen Verschlussteile am Mischraum bzw. Brennraum integral mit der jeweiligen Wandung des Raums auszubilden. Auch ist es denkbar, sie als eigenständiges Bauteil vorzusehen. Insbesondere in diesem Zusammenhang können dann die jeweiligen Einlässe für die Fluide sehr kostengünstig am Verschlussteil vorgesehen sein.

Es ist denkbar, eine Mehrzahl an Primärfluideinlassen und/oder Tertiärfluideinlassen an der Mischkammer bzw. der Brennkammer vorzusehen. Insbesondere sind die jeweiligen Einlasse optional insbesondere gleichmäßig über den Umfang der jeweiligen Kammer bzw. des jeweiligen Verschlussteils verteilt.

Optional bilden die Brennkammer und die Mischkammer eine fraktale Wirrbelrohranordnung. Das bedeutet insbesondere, dass die Brennkammer und die Mischkammer in ihrer Grundgeometrie identisch, jedoch in unterschiedlicher Größe ausgebildet sind. Beispielsweise kann die Brennkammer bzw. der Brennraum einen hyperbolischen Querschnitt aufweisen, während die Mischkammer einen identischen hyperbolischen Querschnitt, jedoch mit reduzierter Größe aufweist.

Wie erwähnt, betrifft die Erfindung auch ein entsprechendes Verfahren zum Betrieb einer solchen Fluidenergiemaschine. Sämtliche in Bezug auf die Fluidenergiemaschine genannten Eigenarten und Ausführungsformen gelten auch für das Verfahren, wobei aus Redundanzgründen nicht explizit darauf eingegangen, sondern nur auf das hierin Genannte verwiesen wird. Umgekehrt gilt sämtliches, in Bezug auf das Verfahren Genannte auch für die Fluidenergiemaschine.

So ist es optional denkbar, dass neben dem Fördern über einen Venturi Effekt insbesondere das Sekundärfluid und/das Quartärfluid aktiv in den Mischraum bzw. den Brennraum gefördert werden, beispielsweise mittels eines Druckreservoirs und/oder einer Fluidpumpe.

Optional ist es denkbar, dass mittels eines Fluidwärmungsmittels ein in der Mischkammer und/oder Brennkammer selbstzündendes Primärfluid-Sekundärfluid-Gemisch bzw. Tertiärfluid-Quartärfluid-Gemisch gebildet wird, das sich in der jeweiligen Kammer entzündet und/oder dass mittels eines Fluidwärmungsmittels das Primärfluid-Sekundärfluid-Gemisch in der Mischkammer gezündet wird und/oder das in der Mischkammer gebildete Primärfluid-Sekundärfluid-Gemisch als Tertiärfluid der Brennkammer zugeführt und dort als Tertiärfluid-Quartärfluid-Gemisch gezündet und/oder weiterverbrannt wird.

Auch ist es denkbar, dass das Tertiärfluid-Quartärfluid-Gemisch die Brennkammer als Quintärfluid verlässt und einer nachgeschalteten Turbine zugeführt wird. Auf diese Weise kann beispielsweise mittels der entsprechend ausgebildeten Turbine über die Fluidenergiemaschine elektrische und/oder kinetische Energie gewonnen werden. Die Turbine kann beispielsweise Antriebsschaufeln oder dergleichen Treibmittel für das zugeführte Quintärfluid aufweisen und ein Dinamomittel oder dergleichen Mittel zur elektrischen Energiegewinnung aus Bewegungsenergie und insbesondere Rotationsenergie.

Der Anwendungsbereich der hier beschriebenen Fluidenergiemaschine erstreckt sich über unterschiedliche Anwendungen einer Gasturbine, einer Verbrennungsmaschine aus der Energie- und Heiztechnik etc., insbesondere zur stationären Energiegewinnung, bis hin zu einem Triebwerk für die Luft- und Raumfahrt. All diese Anwendungsformen sind von der Erfindung mit umfasst.

Weitere Ausführungsformen der Erfindung ergeben sich aus den Unteransprüchen. Im Folgenden wird die Erfindung anhand von Ausführungsbeispielen beschrieben, die durch die beiliegenden Zeichnungen näher erläutert werden. Hierbei zeigen schematisch:
Fig. 1 eine isometrische Darstellung einer ersten Ausführungsform der kontinuierlich arbeitenden und fluidatmenden Fluidenergiemaschine und insbesondere Gasturbine bzw. Triebwerk;
Fig. 2 einen Querschnitt der Ausführungsform gem. Fig. 2;
Fig. 3 und 4 eine isometrische Detaildarstellung eines Tertiärfluideinlasses der Ausführungsform gem. Fig. 1;
Fig. 5 eine Seitenansicht einer weiteren Ausführungsform der erfindungsgemäßen Fluidenergiemaschine und insbesondere Gasturbine bzw. Triebwerk; und
Fig. 6: einen Querschnitt durch eine weitere Ausführungsform der erfindungsgemäßen Fluidenergiemaschine.

Im Folgenden werden für gleiche und gleichwirkende Bauteile dieselben Bezugsziffern verwendet, wobei zur Unterscheidung gleicher Bauteile bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder - komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

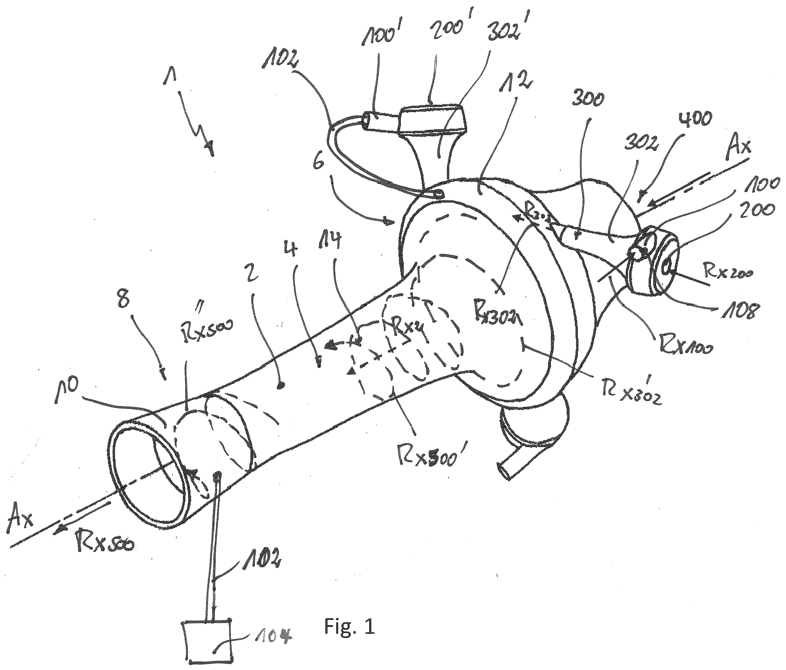

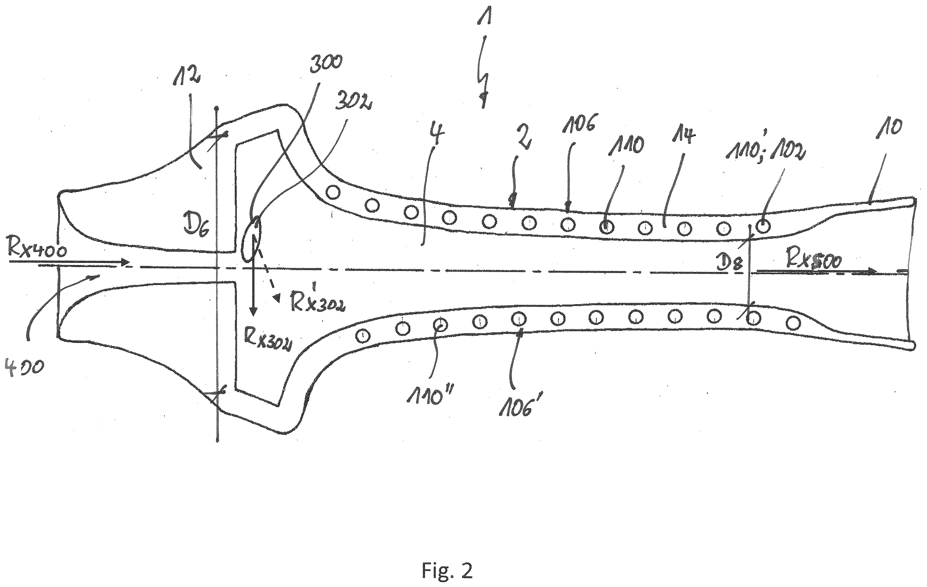

Die Fig. 1 und 2 zeigen eine mögliche Ausführungsform der erfindungsgemäßen Fluidenergiemaschine in einer isometrischen Ansicht (Fig. 1) und einer Schnittansicht (Fig. 2).

Die erfindungsgemäße Fluidenergiemaschine 1 umfasst bei dieser Ausführungsform wenigstens eine Brennkammer 2, die einen Brennraum 4 aufweist, der sich in seinem Querschnitt entlang einer Haupterstreckungsrichtung R_{X2} von einem Einlassende 6 mit einem großen Durchmesser D₆ zu einem Auslassende 8 mit einem kleinen Durchmesser D₈ verjüngt.

Am Auslassende 8 ist optional bei dieser Ausführungsform eine sich in Haupterstreckungsrichtung R_{X2} in ihrem Querschnitt in Haupterstreckungsrichtung R_{X2} erweiternde Düse 10 vorgesehen.

Am Einlassende ist ein den Brennraum 2 insbesondere stirnseitig verschließendes Verschlussteil 12 vorgesehen, was Folgendes aufweist: wenigstens einen insbesondere axial in den Brennraum 4 mündenden Quartärfluideinlass, um den Brennraum 4 wenigstens ein Quartärfluid zuzuführen, und wenigstens einen tangential in den Brennraum 4 mündenden Tertiärfluideinlass 300, um den Brennraum 4 tangential wenigstens ein Tertiärfluid zuzuführen. Der Tertiärfluideinlass 300 weist wenigstens eine Mischkammer 302, mit einem sich in seinem Querschnitt entlang einer Haupterstreckungsrichtung R_{X300} von einem Einlassende 306, mit einem großen Durchmesser, zu einem Auslassende 308, mit einem kleinen Durchmesser, verjüngenden Mischraum 304 auf.

Die Mischkammer 302 weist wiederum Folgendes auf: wenigstens einen insbesondere axial in den Mischraum 304 mündenden Sekundärfluideinlass 200, um dem Mischraum 304 wenigstens ein Sekundärfluid zuzuführen, und wenigstens einen tangential in den Mischraum 304 mündenden Primärfluideinlass 100, um dem Mischraum 304 wenigstens ein Primärfluid zuzuführen.

Kern der Erfindung ist unter anderem die Ausbildung des Brennraums 4 und des Mischraums 2 in seinem sich in der jeweiligen Haupterstreckungsrichtung R_{X2} bzw. R_{X302} verjüngenden Querschnitt und die Einleitung der den jeweiligen Raum 4 bzw. 304 versorgenden Fluide in axialer bzw. tangentialer Richtung. Es hat sich herausgestellt, dass auf diese Weise eine optimale Vermischung und/oder eine sehr energieeffiziente Beschleunigung der geführten Fluide erzielt werden kann. Insbesondere bei der Zuführung eines entsprechend ausgebildeten Primärfluides, umfassend wenigstens einen Brennstoff, ist eine solche Fluidenergiemaschine standschubfähig.

Bei der hier dargestellten Ausführungsform können der Quartärfluideinlass 400 und der Tertiärfluideinlass 300 und/oder der Sekundärfluideinlass 200 und der Primärfluideinlass 100 derart komplementär zueinander angeordnet sein, dass sich ein Venturi-Wirbelrohr-Effekt in der Brennkammer 2 bzw. der Mischkammer 302 ausbildet. Auf diese Weise wird beispielsweise im Bereich des Tertiärfluideinlasses 300 bzw. der Mischkammer 302 das Sekundärfluid über den Sekundärfluideinlass 200 angesogen, ohne dass es einer insbesondere mechanischen Beschleunigung oder Druckbeaufschlagung des Sekundärfluides 200 bedarf. Selbiges ist im Bereich des Quartärfluideinlasses 400 möglich, wobei hier durch den resultierenden Venturi-Wirbelrohr-Effekt eine Venturi-Strömung das Quartärfluid 400 über den Quartärfluideinlass 400 in die Brennkammer 2 bzw. den Brennraum 4 saugt. Eine aktive Förderung könnte aber optional dennoch wenigstens anteilig anordbar sein.

Eine derart ausgebildete Fluidenergiemaschine kann insbesondere standschubfähig sein, das bedeutet insbesondere, dass es keiner aktiven Förderung des Quartärfluides in den Brennraum 4 bedarf. Auf diese Weise kann beispielsweise eine Turbine zur Verfügung gestellt werden, die selbst aus dem Stand gezündet werden kann. Es sind keine insbesondere mechanischen Bauteile wie Verdichtergruppen, Pumpen oder dergleichen Einrichtungen zum Starten der Turbine 1 nötig.

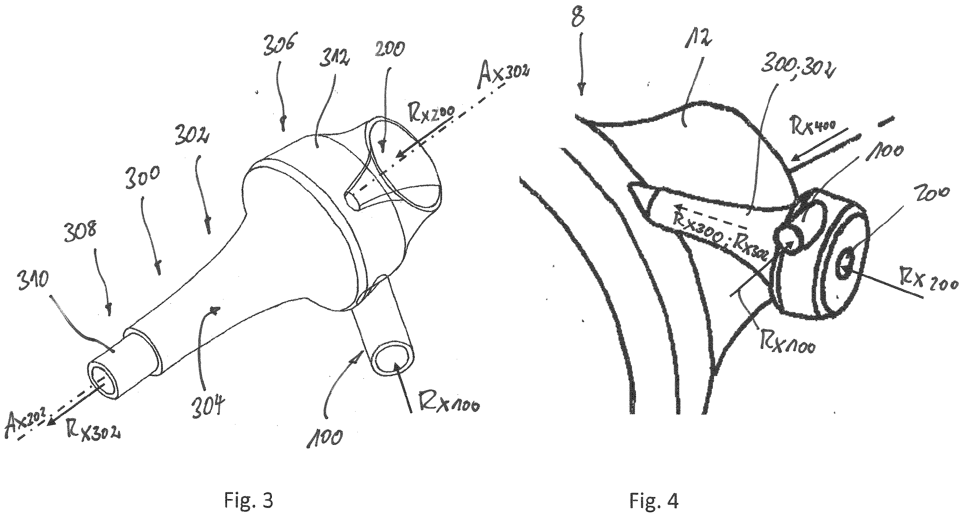

Wie in den Fig. 1 bis 4 dargestellt, ist es denkbar, dass der Brennraum 4 und/oder der Mischraum 304 in ihrer jeweiligen Haupterstreckungsrichtung R_{X2}; R_{X302} wenigstens abschnittsweise in Form eines sich stetig verjüngenden und insbesondere verjüngenden hyperbolartigen, insbesondere hyperboloiden Trichters ausgeführt sind. Auf diese Weise wird das darin geführte Fluid optimal strömungsgeführt bzw. ist energieeffizient beschleunigbar.

Insbesondere ist es denkbar, dass der Quartärfluideinlass 400 und/oder der Tertiärfluideinlass 300 und/oder der Sekundärfluideinlass 200 und/oder der Primärfluideinlass 100 und/oder der Brennraum und/oder der Mischraum in ihrem jeweiligen Querschnitt entlang ihrer Haupterstreckungsrichtung R_{X400}; R_{X300}; R_{X200}; R_{X100} von einem Einlassende mit einem großen Durchmesser zu einem Auslassende mit einem kleinen Durchmesser verjüngend und insbesondere in Form eines sich verjüngenden hyperbolartigen, insbesondere hyperboloiden Trichters ausgebildet sind.

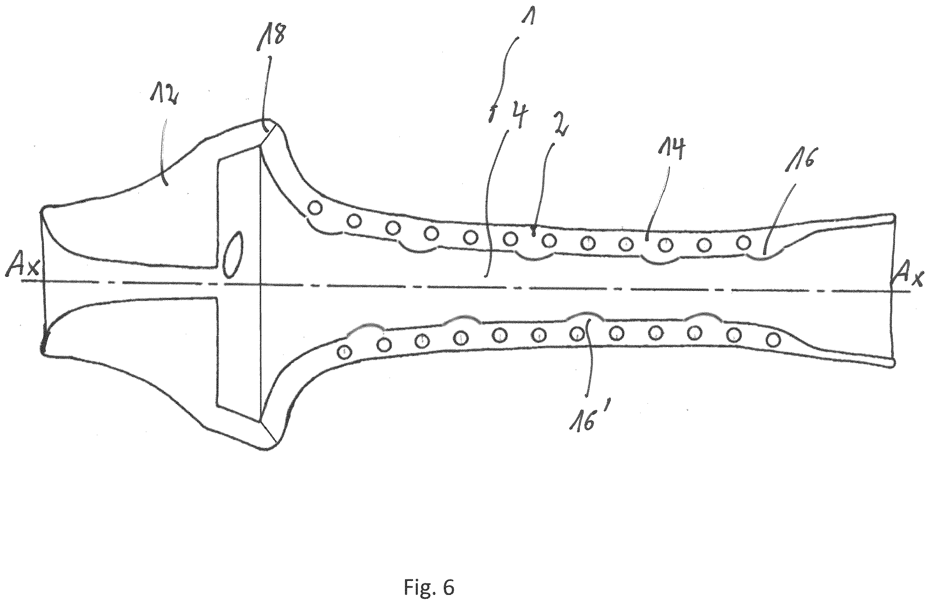

Darüber hinaus ist es denkbar, dass wenigstens einer der Einlässe 400; 300; 200; 100 oder Räume 4, 304 in sich gedreht ausgeführt ist und/oder für das darin geführte Fluid einen in sich gedrehten Strömungsweg definierend ausgebildet ist. Es ist denkbar, wenigsten eine Stromleitführung insbesondere Stromleitführung für den Fluidstrom vorzusehen, beispielsweise in Form eines hyperbolartigen Einbaus und insbesondere einer hyperbolartigen Spirale, um das geführte Fluid in eine Spiralströmung und insbesondere eine logarithmisch abnehmende hyperbolartige Spiralbahn zu drängen. Eine solche Ausführungsform ist beispielsweise in Fig. 6 dargestellt. Die Stromleitführungen 16 sind hier in Form von Vorsprüngen der Wandung 14 ausgebildet, die sich wenigstens abschnittsweise spiralförmig entlang der Wandung 14 der Brennkammer 4 erstrecken. Solche Stromleitführungen 16 können auch in der Mischkammer 302 und/oder in Fluidleitungsmitteln 110 vorgesehen sein. Darüber hinaus ist es denkbar, solche Stromleitführungen 16 auch in den Düsen 10 bzw. 310 vorzusehen. Es ist auch möglich, wenigstens eine Kammer und/oder wenigstens einen Einlass, beispielsweise die Brennkammer 2 bzw. die Mischkammer 302, in sich gedreht auszuführen und insbesondere um die Achse Ax, also die Haupterstreckungsachse, zu tordieren, damit sich ein spiralförmiger Strömungsweg in Form einer Stromleitführung ergibt. Vorzugsweise ist dieser Strömungsweg in seiner Steigung logarithmisch abnehmend ausgeführt. Optional ist die Stromleitführung so ausgebildet, dass sie das geführte Fluid in eine Spiralströmung und insbesondere eine logarithmisch abnehmende, hyperbolartige Spiralbahn drängt.

Die Haupterstreckungsrichtung R_{X400}; R_{X300}; R_{X200}; R_{X100} bilden optional die Hauptströmungsrichtungen der dort geführten Fluide.

Wie erwähnt, befindet sich am Auslassende 8 der Brennkammer 2 eine Düse 10. Eine ähnliche Düse 310 kann sich optional am Auslassende 308 der Mischkammer 302 befinden. Diese Düse kann die Form eines hyperbolartigen und insbesondere hyperboloiden Diffusors aufweisen. Zudem ist es denkbar, die Düse 10, 310 bzw. den Bereich am Auslassende 8; 308 der jeweiligen Kammer als eine Lavaldüse auszubilden. Optional ist die Düse 8; 308 derart ausgebildet, dass sie die Wirbelströmung des Fluides, das in der Brennkammer 2 bzw. der Mischkammer 302 geführt wird, gleichrichtet und/oder eine hohe möglichst hohe Ausströmungsgeschwindigkeit generiert. Die Düse kann analog zur Geometrie der Brennkammer 2 bzw. der Mischkammer 302 jedoch insbesondere gegenläufig ausgeführt sein. Sie kann ebenfalls in sich gedreht sein und/oder entsprechende Leitelemente zur Strömungsleitführung enthalten. Die Stromleitführung ist optional zur Strömungsgleichrichtung ausgebildet, um eine dort geführte Strömung gleichzurichten. Insbesondere ist es denkbar und besonders, wenn es darum geht, eine optimale Schuberzeugung bei einer als Gasturbine ausgebildeten Fluidenergiemaschine zu erreichen, die Düse derart auszubilden, dass die aus der Brennkammer austretende Wirbelströmung laminarisiert und beschleunigt wird.

Wie insbesondere in den Fig. 1, 3 und 4 dargestellt, weist die Mischkammer 302 optional einen den Mischraum 304 an einem Einlassende 306 verschließendes Verschlussteil 312 auf. An diesem Verschlussteil 312 können wenigstens der eine Sekundärfluideinlass 200 und/oder der wenigstens eine Primärfluideinlass 100 vorgesehen sein. Darüber hinaus ist optional am Auslassende des Mischraums 304 die sich in Haupterstreckungsrichtung Rₓ₃₀₂ in ihrem Querschnitt erweiternde Düse 310 vorgesehen.

Bei diesem Ausführungsbeispiel sind optional die Brennkammer 2 und die Mischkammer 302 als eine fraktale Wirbelrohranordnung ausgebildet. Die Brennkammer entspricht optional insbesondere in ihrer Geometrie der Mischkammer und umgekehrt, wobei unterschiedliche Dimensionen realisiert sind. Theoretisch ist es denkbar, als Primärfluideinlass 100 wenigstens eine weitere entsprechend ausgebildete Vormischkammer (nicht dargestellt) vorzusehen, die entsprechend der Mischkammer 302 aber mit geringeren Abmessungen ausgeführt ist. Diese fraktale Ausbildung von ineinander leitenden Kammern kann im Prinzip in mehrfachen Stufen fortgesetzt werden, wobei in Strömungsrichtung das stromaufwärtsgelegene Wirbelrohr bzw. die stromaufwärtsgelegene Kammer in ihrer Geometrie kleiner gewählt wird als die in Strömungsrichtung folgende Kammer.

Insbesondere um den Venturi-Wirbelrohr-Effekt zu verbessern, sind optional der Quartärfluideinlass und/oder der Sekundärfluideinlass mit der Atmosphäre in Fluidverbindung stehend ausgeführt. Darüber hinaus ist es denkbar, dass das Quartärfluid und/oder das Sekundärfluid Luft sind.

Die hier dargestellten Ausführungsformen der Fluidenergiemaschine durchlaufen im Betrieb und insbesondere bei der Mischung und/oder Verbrennung und/oder Beschleunigung von Fluiden optional folgende Schritte. In einem ersten Schritt wird ein Primärfluid 100 über den tangentialen Primärfluideinlass 100 in den Mischraum 304 der Mischkammer 302 zugeführt, sodass sich im Mischraum 304 eine Wirbelströmung bildet, wobei u.a. durch einen Venturi-Effekt über den Sekundärfluideinlass 200 ein Sekundärfluid in den Mischraum 304 gefördert wird. Bei dieser Förderung bildet sich ein Primärfluid-Sekundärfluid-Gemisch, das als Tertiärfluid bezeichnet werden kann.

Es ist denkbar, das Primärfluid, eingeleitet über den Primärfluideinlass 100, als einen Brennstoff auszubilden. Das Primärfluid kann optional über ein Primärfluidreservoir 104 und/oder eine Primärfluidpumpe zugeführt werden. Bei Verwendung eines Brennstoffs kann das Primärfluidreservoir ein Brennstoffreservoir bzw. die Fluidpumpe eine Brennstoffpumpe sein.

Das in der Mischkammer 302 gebildete Tertiärfluid wird über den tangential angeordneten Tertiärfluideinlass 300 dem Brennraum 4 der Brennkammer 2 zugeführt, sodass sich im Brennraum 4 wieder eine Wirbelströmung bildet. U.a. durch einen entstehenden Venturi-Effekt wird über den Quartärfluideinlass 400 das Quartärfluid in den Brennraum 4 gefördert, sodass sich ein Tertiärfluid-Quartärfluid-Gemisch bildet, das den Brennraum 4 am Auslassende 8 als Quintärfluid, insbesondere in Richtung R_{X500} verlässt.

Wie in Fig. 1 dargestellt, durchlaufen das in den Brennraum 4 eingeführte Tertiärfluid und das mit diesem vermischte Quartärfluid die Brennkammer 4 entlang der Hauptströmungsrichtung R_{X2} in einer Spiralbahn, die hier durch den gestrichelten Pfeil R'_{X500} dargestellt ist. Optional wird durch entsprechende Strömungsleitführungen in der Düse diese Spiralbahn verändert und insbesondere logarithmisch abnehmend verändert, sodass sich eine veränderte Spiralbahn R"_{X500} ergibt. Dies hat eine besonders effektive Laminarisierung und Beschleunigung der aus der Brennkammer 2 austretenden Wirbelströmung zur Folge.

Die Fluidversorgung der Fluidenergiemaschine und insbesondere einer als Gasturbine, bspw. Triebwerk ausgeführten Fluidenergiemaschine erfolgt optional über einen Druckfluidspeicher. Insbesondere bei der Ausbildung der Fluidenergiemaschine als Garturbine kann neben einem Druckfluidspeicher auch oder alternativ ein druckloser Fluidspeicher für gasförmige oder flüssige Fluide und insbesondere Brennstoffe verwendet werden, wobei dann ein zusätzlicher Verdichter und insbesondere eine Fluidpumpe notwendig ist. Diese Fluidpumpe erzeugt optional einen höheren Fluiddruck, als er in der Fluidzuleitung für den jeweiligen Fluideinlass herrscht. Selbiges gilt optional auch für den Druck im Fluidreservoir.

Wie insbesondere in Fig. 1 und 2 dargestellt, ist es denkbar, dass wenigstens ein Einlass und/oder wenigstens eine Kammer 2; 302 und insbesondere der Primärfluideinlass 100 und/oder der Sekundärfluideinlass 200 wenigstens ein Fluidleitungsmittel 102 und insbesondere wenigstens ein Primärfluidleitungsmittel 102 bzw. Sekundärfluidleitungsmittel aufweisen, über die sie mit einem Fluidreservoir 104, beispielsweise einem Brennstoffreservoir, oder einer Fluidpumpe, beispielsweise einer Brennstoffpumpe, in Fluidverbindung stehen. Bei einer besonderen Ausführungsform weist wenigstens ein Abschnitt des Primärfluidleitungsmittels 102 und/oder Sekundärfluidleitungsmittels wenigstens ein Fluidwärmungsmittel 106 auf. Bei der hier dargestellten Ausführungsform in Fig. 2 ist das Fluidwärmungsmittel 106 beispielsweise als ein der Brennkammer 2 zugeordneter Wärmetauscher 106 ausgeführt. Dieser umfasst insbesondere wenigstens eine in der Wandung 14 der Brennkammer 2 verlaufende Fluidleitung 110. Diese Fluidleitung 110 ist optional von der Düse 10 bis zum Einlassende 6 wenigstens abschnittsweise in der Wandung 14 der Brennkammer 2 geführt, wobei sie mit der Brennkammer 4 in thermischer Kopplung steht. Sobald die Brennkammer 4 eine höhere Temperatur aufweist als das geführte Primärfluid, erhitzt sich das Primärfluid, was gleichzeitig zu einer Kühlung der Wandung 14 bzw. der Düse 10 führt. Es ist denkbar, das Fluidwärmungsmittel 106 und insbesondere den hier beschriebenen Wärmetauscher 106 derart auszubilden, dass das darin geführte Fluid seinen Aggregatzustand und insbesondere einen flüssigen Aggregatzustand zu einem gasförmigen Aggregatszustand verändert. Bei einer solchen Ausführungsform ist es dann denkbar, das in der Mischkammer 304 gemischte Tertiärfluid als selbstzündendes Tertiärfluid auszuführen, sodass es zu einer wenigstens teilweisen Verbrennung in der Mischkammer 304 kommt.

Anstelle oder in Ergänzung zu dem hier dargestellten Wärmetauscher 106 ist es auch denkbar, das Fluidwärmungsmittel 106 als Zündvorrichtung auszuführen, um ein zündfähiges Fluid und insbesondere Fluidgemisch in der Mischkammer 302 bzw. der Brennkammer 2 zu zünden.

Um auf den Wärmetauscher bzw. das entsprechend ausgebildete Fluidwärmungsmittel 106 zurückzukommen: Wie in Fig. 2 dargestellt, ist es optional möglich, die Fluidleitung 110 spiralförmig in oder an der Wandung der Brennkammer oder an der Wandung der Brennkammer zu führen, und zwar vorzugsweise von der Düse bis zu dem Bereich der Brennkammer mit insbesondere dem Verschlussmittel. Es ist auch eine Führung im oder am Verschlussmittel denkbar. Optional wird zur Fluiderwärmung das Fluidreservoir 104 über das Fluidleitungsmittel 102 der Düse 10 bzw. im Einlassbereich 8 der Brennkammer 2 zugeführt, wo das Fluid und insbesondere das Primärfluid spiralförmig um den Brennraum 4 verläuft und bis zum Verschlussteil 12 geführt wird. Von dort wird das Fluid über ein weiteres Fluidleitungsmittel 102 dem Primärfluideinlass 100 zugeführt. Neben der Fluid- und insbesondere Brennstoffvorerwärmung und der Druckerhöhung wird so eine Kühlung der Düse bzw. der Brennkammerwandung 14 erwirkt.

Optional ist es denkbar, dass der Tertiärfluideinlass 300 und/oder der Primärfluideinlass 100 wenigstens ein Ventilmittel 108 aufweisen, um die Zufuhr des darin geförderten Fluides zu stoppen und/oder zu ermöglichen und/oder in der Zuführmenge zu regeln. Wie bereits erwähnt, kann auf diese Weise über das Ventilmittel 108 Primärfluid erst dann dem Mischraum 304 zugeführt werden, wenn ausreichend Primärfluiddruck aufgebaut ist. Auf diese Weise wird sichergestellt, dass ein Venturi-Wirbelrohr-Effekt und insbesondere das Einsaugen des Sekundärfluides über den Sekundärfluideinlass 200 erfolgen, ohne dass das Sekundärfluid aktiv gefördert werden muss. Selbiges gilt für ein Ventilmittel vor der Brennkammer 2.

Optional ist natürlich auch eine aktive Förderung des Quartärfluides und/oder des Primärfluides über den jeweiligen Einlass 400; 200 realisierbar, beispielsweise unter Anwendung entsprechender Druckreservoire bzw. Förderpumpen.

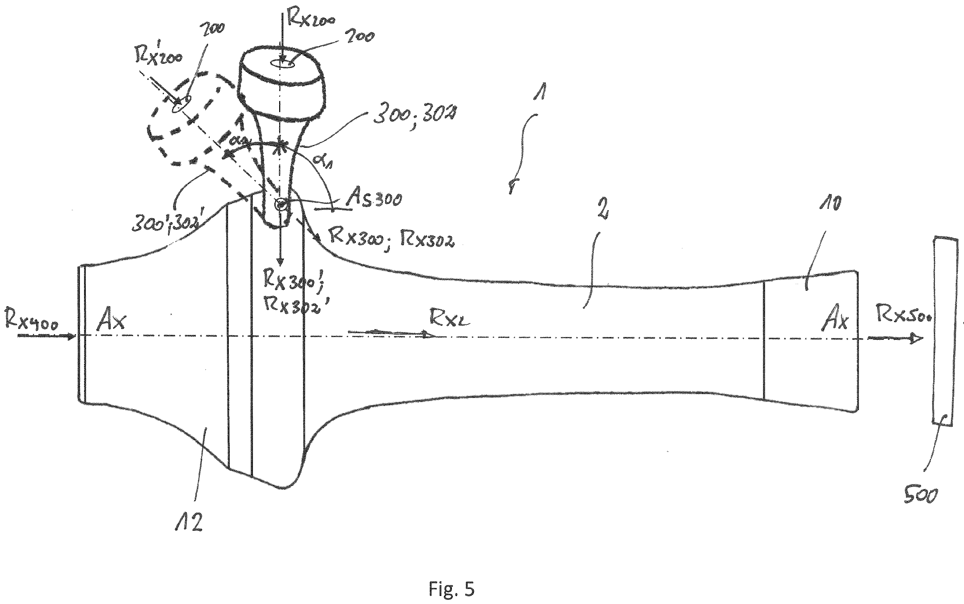

Fig. 5 zeigt eine Ausführungsform, bei der optional der Tertiärfluideinlass 300 um eine orthogonal zur Hauptströmungsrichtung R_{X2} in der einmündenden Kammer 4, hier die Brennkammer 4, verlaufende Schwenkachse A_{S300} in einer Schwenkrichtung entgegen der Hauptströmungsrichtung R_{X2} in einem Bereich von 90 bis 150 Grad verschwenkbar ausgebildet ist. Diese Verschwenkbarkeit ist hier durch die in vollen Linien dargestellte Mischkammer 2 und die um den Winkel α verschwenkte, gestrichelt dargestellte Mischkammer 302 dargestellt. Im verschwenkten Zustand wird das Tertiärfluid tangential aber weiter in Richtung der Hauptströmungsrichtung R_{X2} der Brennkammer 2 eingeführt und insofern die Fluidströmung insbesondere im Auslassbereich der Kammer beschleunigt.

Der Verschwenkwinkel α ist hier durch den Verschwenkwinkel α₁ von 90 Grad und den weiteren Verschwenkwinkel von α₂ mit 150 Grad dargestellt, immer ausgehend von der Haupterstreckungsachse Ax. Über die Größe des Versschwenkwinkels kann der Venturi-Wirbelrohr-Effekt und die Strömungsgeschwindigkeit in axialer Richtung, insbesondere in Richtung R_{X500} der Fluidenergiemaschine beeinflusst werden. Für eine variable Schubkontrolle kann der axiale Verschwenkwinkel α variiert werden.

Wie bereits erwähnt, sind optional die Einlasse 400; 300; 200; 100 und/oder die Kammern in Form von hyperbolartigen Trichtern vorgesehen, wodurch eine verbesserte Fluidführung und insbesondere bei den Quartär- und Sekundäreinlassen 400; 200 eine verbesserte Fluidansaugung gegenüber einer einfachen Blendenöffnung erzielt wird. Dies gilt natürlich für den Fall, bei dem der Quartärfluideinlass 400 bzw. der Sekundärfluideinlass 200 mit der Atmosphäre in Verbindung steht.

Exemplarisch ist in Fig. 5 dargestellt, dass das in der Brennkammer 2 befindliche Tertiärfluid-Quartärfluid-Gemisch als Quintärfluid entlang der Hauptströmungsrichtung R_{X500} einer Turbine 500 zugeführt werden kann.
Über diese Turbine 500 kann u.a. die kinetische Energie des Quintärfluides in elektrische Energie umgesetzt werden.

Zudem zeigt Fig. 5 eine Ausführungsform, bei der exemplarisch das Verschlussteil 12 als eigenständiges Bauteil ausgebildet ist und im Bereich einer Fügekante 18 an die eine Stirnseite Wandung 14 der Hauptmischkammer 2 anschließt. Fig. 1 zeigt dagegen exemplarisch ein integral ausgebildetes Verschlussteil 12.

### Bezugszeichen

- α₁: Verschwenkwinkel
- α₂: Verschwenkwinkel
- Aₛ₃₀₀: Schwenkachse
- D₆: Durchmesser
- D₈: Durchmesser
- Rₓ₂: Haupterstreckungsrichtung bzw. Hauptströmungsrichtung
- Rₓ₃₀₂: Haupterstreckungsrichtung bzw. Hauptströmungsrichtung
- Rₓ₄₀₀: Haupterstreckungsrichtung bzw. Hauptströmungsrichtung
- Rₓ₃₀₀: Haupterstreckungsrichtung bzw. Hauptströmungsrichtung
- Rₓ₂₀₀: Haupterstreckungsrichtung bzw. Hauptströmungsrichtung
- Rₓ₁₀₀: Haupterstreckungsrichtung bzw. Hauptströmungsrichtung
- Rₓ₅₀₀: Haupterstreckungsrichtung bzw. Hauptströmungsrichtung
- R'ₓ₅₀₀: Strömungsrichtung
- R"ₓ₅₀₀: Strömungsrichtung
- 1: Fluidenergiemaschine
- 2: Brennkammer
- 4: Brennraum
- 6: Einlassende
- 8: Auslassende
- 10: Düse
- 12: Verschlussteil
- 14: Wandung
- 16: Stromleitführung
- 18: Fügekante
- 100: Primärfluideinlass
- 102: Primärfluidleitungsmittel
- 104: Fluidreservoir
- 106: Fluidwärmungsmittel bzw. Wärmetauscher
- 108: Ventilmittel
- 110: Fluidleitung
- 200: Sekundärfluideinlass
- 300: Tertiärfluideinlass
- 302: Mischkammer
- 304: Mischraum
- 306: Einlassende
- 308: Auslassende
- 310: Düse
- 312: Verschlussteil
- 400: Quartärfluideinlass
- 500: Turbine

## Patentansprüche

1. Fluidenergiemaschine (1) und insbesondere kontinuierlich arbeitende und fluidatmende Fluidenergiemaschine (1), wie eine Gasturbine oder dergleichen Verbrennungseinrichtung umfassend wenigstens eine Brennkammer (2) mit wenigstens einem Brennraum (4), der sich in seinem Querschnitt entlang einer Haupterstreckungsrichtung (Rₓ₂) von einem Einlassende (6) mit einem großen Durchmesser D₆ zu einem Auslassende (8) mit einem kleinen Durchmesser D₈ verjüngt, wobei am Auslassende (8) eine sich in Haupterstreckungsrichtung (Rₓ₂) in ihrem Querschnitt in Haupterstreckungsrichtung (Rₓ₂) erweiternde Düse (10) vorgesehen ist, und wobei am Einlassende (6) ein den Brennraum (2) insbesondere stirnseitig verschließendes Verschlussteil (12) vorgesehen ist, wobei das Verschlussteil (12) folgendes aufweist:
wenigstens einen insbesondere axial in den Brennraum (4) mündenden Quartärfluideinlass (400), um dem Brennraum (4) wenigstens ein Quartärfluid zuzuführen, und
wenigstens einen tangential in den Brennraum (4) mündenden Tertiärfluideinlass (300), um dem Brennraum (4) tangential wenigstens ein Tertiärfluid zuzuführen, wobei der Tertiärfluideinlass (300) wenigstens eine Mischkammer (302) aufweist, mit einem sich in seinem Querschnitt entlang einer Haupterstreckungsrichtung (Rₓ₃₀₀) von einem Einlassende (306), mit einem großen Durchmesser, zu einem Auslassende (308), mit einem kleinen Durchmesser verjüngenden Mischraum (304), und wobei die Mischkammer (302) folgendes aufweist:
wenigstens einen insbesondere axial in den Mischraum (304) mündenden Sekundärfluideinlass (200), um dem Mischraum (304) wenigstens ein Sekundärfluid zuzuführen, und
wenigstens einen tangential in den Mischraum (304) mündenden Primärfluideinlass (100), um dem Mischraum (304) wenigstens ein Primärfluid zuzuführen.

2. Fluidenergiemaschine nach Anspruch 1,
**dadurch gekennzeichnet, dass**
der Quartärfluideinlass (400) und der Tertiärfluideinlass (300) und/oder der Sekundärfluideinlass (200) und der Primärfluideinlass (100) derart komplementär zueinander angeordnet sind, dass sich ein Venturi-Wirbelrohreffekt in der Brennkammer (2) bzw. in der Mischkammer (302) ausbildet.

3. Fluidenergiemaschine nach einem der vorhergehenden Ansprüche,
**dadurch gekennzeichnet, dass**
das Primärfluid einen Brennstoff umfasst, und der Quartärfluideinlass (400) und/oder der Sekundärfluideinlass (200) mit der Atmosphäre in Fluidverbindung stehen und/oder das Quartärfluid und/oder das Sekundärfluid Luft sind.

4. Fluidenergiemaschine nach einem der vorhergehenden Ansprüche,
**dadurch gekennzeichnet, dass**
der Brennraum (4) und/oder der Mischraum (304) in ihrer jeweiligen Haupterstreckungsrichtung (R_{x2;} Rₓ₃₀₂) wenigstens abschnittsweise in Form eines sich stetig verjüngenden und insbesondere verjüngenden hyperbolartigen Trichters ausgeführt sind.

5. Fluidenergiemaschine nach einem der vorhergehenden Ansprüche,
**dadurch gekennzeichnet, dass**
der Quartärfluideinlass (400) und/oder der Tertiärfluideinlass (300) und/oder der Sekundärfluideinlass (200) und/oder der Primärfluideinlass (100) in ihrem jeweiligen Querschnitt entlang ihrer Haupterstreckungsrichtung (R_{X400;} R_{X300}; R_{X200}; R_{X100}) von einem Einlassende mit einem großen Durchmesser zu einem Auslassende mit einem kleinen Durchmesser verjüngend und insbesondere in Form eines sich verjüngenden hyperbolartigen Trichters ausgebildet sind.

6. Fluidenergiemaschine nach einem der vorhergehenden Ansprüche,
**dadurch gekennzeichnet, dass**
die Düse (10) als eine Lavaldüse ausgebildet ist und/oder wenigstens eine Stromleitführung, insbesondere eine Spiralströmungsführung aufweist, um das geführte Fluid in einen spiralförmigen Strömungsweg, insbesondere mit in Strömungsrichtung abnehmender Steigung zu zwingen.

7. Fluidenergiemaschine nach einem der vorhergehenden Ansprüche,
**dadurch gekennzeichnet, dass**
der Primärfluideinlass (100) und/oder der Sekundärfluideinlass (200) Primärfluidleitungsmittel (102) bzw. Sekundärfluidleitungsmittel aufweisen, über die sie mit einem Fluidreservoir, beispielsweise einem Brennstoffreservoir (104), oder einer Fluidpumpe, beispielswiese einer Brennstoffpumpe, in Fluidverbindung stehen, wobei
wenigstens ein Abschnitt des Primärfluidleitungsmittels (102) und/oder des Sekundärfluidleitungsmittels wenigstens ein Fluidwärmungsmittel (106) aufweist, beispielsweise einen der Brennkammer (2) zugeordneten Wärmetauscher (106), insbesondere umfassend wenigstens eine in oder an einer Wandung (14) der Brennkammer (2) verlaufende Fluidleitung (110) und/oder eine Zündvorrichtung zur Zündung eines zündfähigen Fluides und insbesondere Fluidgemisches.

8. Fluidenergiemaschine nach einem der vorhergehenden Ansprüche,
**dadurch gekennzeichnet, dass**
das der Tertiärfluideinlass (300) und/oder der Primärfluideinlass (100) wenigstens ein Ventilmittel (108) aufweisen, um die Zufuhr des darin geführten Fluides zu stoppen und zu ermöglichen und/oder in der Zuführmenge zu Regeln.

9. Fluidenergiemaschine nach einem der vorhergehenden Ansprüche,
**dadurch gekennzeichnet, dass**
im Quartärfluideinlass (400) und/oder Tertiärfluideinlass (300) und/oder Sekundärfluideinlass (200) und/oder Primärfluideinlass (100) und/oder Brennraum und/oder Mischraum wenigstens eine Stromleitführung vorgesehen ist, die für das geführte Fluid einen in sich gedrehten Strömungsweg definieren, beispielsweise in Form einer hyperbolartigen Spirale, um das geführte Fluid in eine Spiralströmung und insbesondere eine logarithmisch abnehmende, hyperbolartige Spiralbahn zu drängen.

10. Fluidenergiemaschine nach einem der vorhergehenden Ansprüche,
**dadurch gekennzeichnet, dass**
der Tertiärfluideinlass (300) und/oder der Primärfluideinlass (100) um eine orthogonal zur jeweiligen Hauptströmungsrichtung (R_{x2;} Rₓ₃₀₂) in der einmündenden Kammer (4; 304) verlaufende Schwenkachse (A_{S300}; Aₛ₁₀₀) in einer Schwenkrichtung entgegen der Hauptströmungsrichtung (R_{x2;} Rₓ₃₀₂) in einem Bereich von 90° bis 150° verschwenkbar ausgebildet ist.

11. Fluidenergiemaschine nach einem der vorhergehenden Ansprüche,
**dadurch gekennzeichnet, dass** die Mischkammer (302) ein
den Mischraum (304) an einem Einlassende (306) verschließendes Verschlussteil (312) aufweist, an dem wenigstens der eine Sekundärfluideinlass (200) und wenigstens der eine Primärfluideinlass (100) vorgesehen sind und/oder an einem Auslassende (308) des Mischraumes (304) eine sich in Haupterstreckungsrichtung (Rₓ₃₀₂) in ihrem Querschnitt erweiternde Düse (310) vorgesehen ist.

12. Fluidenergiemaschine nach einem der vorhergehenden Ansprüche,
**dadurch gekennzeichnet, dass**
die Brennkammer (2) und die Mischkammer (302) eine fraktale Wirbelrohranordnung bilden.

13. Verfahren zum Betrieb einer Fluidenergiemaschine nach einem der Patentansprüche 1 bis 12, umfassend die folgenden Schritte:
Zuführen eines Primärfluides (100) über den tangentialen Primärfluideinlass (100) in den Mischraum (304) der Mischkammer (302), so dass sich im Mischraum (304) eine Wirbelströmung bildet, wobei durch einen Venturi-Effekt über den Sekundärfluideinlass (200) ein Sekundärfluid in den Mischraum (304) gefördert wird und sich durch eine Primärfluid-Sekundärfluid-Mischung ein Tertiärfluid bildet;
Zuführen des Tertiärfluides über den tangentialen Tertiärfluideinlass (300) zum Brennraum (4) der Brennkammer (2), so dass sich im Brennraum (4) eine Wirbelströmung bildet, wobei durch einen Venturi-Effekt über den Quartärfluideinlass (400) ein Quartärfluid in den Brennraum (4) gefördert wird, wobei ein Tertiärfluid-Quartärfluid-Gemisch gebildet und am Auslassende (8) des Brennraumes (4) als Quintärfluid ausgegeben wird.

14. Verfahren nach Anspruch 13,
**dadurch gekennzeichnet, dass**
mittels eines Fluidwärmungsmittels ein in der Mischkammer (302) selbstzündendes Primärfluid-Sekundärfluid-Gemisch gebildet das sich in der Mischkammer entzündet und/oder mittels eines Fluidwärmungsmittels das Primärfluid-Sekundärfluid-Gemisch in der Mischkammer (302) gezündet wird und/oder das in der Mischkammer (302) gebildete Primärfluid-Sekundärfluid-Gemisch als Tertiärfluid der Brennkammer (4) zugeführt und dort als Tertiärfluid-Quartärfluid-Gemisch gezündet und/oder weiter verbrannt wird.

15. Verfahren nach Anspruch 13 oder 14,
**dadurch gekennzeichnet, dass**
das Tertiärfluid-Quartärfluid-Gemisch die Brennkammer (2) verlässt und einer nachgeschalteten Turbine zugeführt wird.
